(19) **Europäisches Patentamt European Patent Office Office européen des brevets**

(11) **EP 4 773 317 A1**

(12) **EUROPEAN PATENT APPLICATION**

(43) Date of publication:
08.07.2026 Bulletin 2026/28

(21) Application number: 25220987.9

(22) Date of filing: 05.12.2025

(51) International Patent Classification (IPC):
*H01M 10/0585* $^{(2010.01)}$

(52) Cooperative Patent Classification (CPC):
**H01M 10/0562; H01M 10/0585;** H01M 2004/028;
H01M 2300/0097

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.12.2024 JP 2024216009**

(71) Applicant: **Toyota Jidosha Kabushiki Kaisha
Toyota-shi, Aichi-ken 471-8571 (JP)**

(72) Inventor: **MATSUYAMA, Takuya
Toyota-shi, Aichi-ken, 471-8571 (JP)**

(74) Representative: **Winter, Brandl - Partnerschaft
mbB
Alois-Steinecker-Straße 22
85354 Freising (DE)**

(54) **SOLID-STATE BATTERY AND METHOD OF MANUFACTURING SOLID-STATE BATTERY**

(57) A solid-state battery includes: a positive electrode current collector; a positive electrode layer disposed on at least one main face of the positive electrode current collector; an insulating layer that is disposed on the one main face of the positive electrode current collector, is contiguous with the end portion of the positive electrode layer, and is flush with the positive electrode layer; and a solid electrolyte layer disposed on the positive electrode layer and the insulating layer with its end portion in a position overlying the insulating layer.

FIG.1

**Description**

Technical Field

This disclosure relates to a solid-state battery and a method of manufacturing a solid-state battery.

Related Art

Secondary batteries have increased in importance in recent years, and advancements are being made in the development of secondary batteries including electrolytes and also solid-state batteries using solid electrolytes. An all-solid-state battery, which is an example of a solid-state battery, is a battery that has a solid electrolyte layer instead of an electrolyte solution, and because it does not use a flammable organic solvent, safety devices can be simplified, resulting in excellent manufacturing costs and productivity.

International Publication No. 2012-114497 discloses a solid-state battery where a first electrode layer, a solid electrolyte layer, and a second electrode layer are laminated in this order, wherein a first insulating layer is disposed on the outer periphery of the first electrode layer, the size of a lamination face of the first electrode layer whose normal direction coincides with the layered direction is smaller than that of the solid electrolyte layer, when viewed from the layered direction the outer edge of the solid electrolyte layer is positioned on the outer periphery of the first electrode layer and the outer edge of the first insulating layer is positioned on the outer periphery of the solid electrolyte layer, and the first electrode layer, the first insulating layer, and the solid electrolyte layer are disposed such that the outer edge of the first insulating layer and the end portion of the solid electrolyte layer are in contact with each other. In the solid-state battery disclosed in International Publication No. 2012-114497, a situation where the solid electrolyte layer becomes curved and damaged can be inhibited as a result of the thickness of the first insulating layer being equal to or less than the thickness of the first electrode layer.

Furthermore, Japanese Patent Application Laid-open (JP-A) No. 2023-107428 discloses a solid-state battery where a positive electrode layer formed on a positive electrode current collector has an inclined face that is inclined toward the positive electrode current collector, and the inclined face is covered by an ion conducting layer with a lower Young's modulus than a solid electrolyte layer. According to JP-A No. 2023-107428, even when the positive electrode layer expands and contracts in association with charging and discharging, stress concentration in corner portions of the positive electrode layer relative to the solid electrolyte layer can be inhibited.

SUMMARY OF INVENTION

However, there has been the concern that if, for example, pressure is applied in the layered direction to a structure where a positive electrode layer and a solid electrolyte layer are sequentially laminated on a positive electrode current collector, the solid electrolyte layer will end up sustaining damage. Thus, it is an object of an embodiment of this disclosure to provide a solid-state battery that has a structure where a positive electrode layer and a solid electrolyte layer are sequentially laminated on a positive electrode current collector and can prevent damage to the solid electrolyte layer even if pressure is applied in the layered direction and a method of manufacturing a solid-state battery.

This disclosure, which achieves the above object, includes the following aspects.

<1> A solid-state battery, comprising: a positive electrode current collector; a positive electrode layer disposed on at least one main face of the positive electrode current collector; an insulating layer that is disposed on the at least one main face of the positive electrode current collector, that is contiguous with an end portion of the positive electrode layer, and that is flush with the positive electrode layer; and a solid electrolyte layer disposed on the positive electrode layer and the insulating layer and having an end portion in a position overlying the insulating layer.

<2> The solid-state battery of <1>, wherein the positive electrode current collector comprises a positive electrode current collector tab-side end portion connected to a positive electrode current collector tab, and wherein the insulating layer and the positive electrode layer are disposed in this order from the positive electrode current collector tab-side end portion.

<3> The solid-state battery of <1> or <2>, comprising an adhesive layer between the positive electrode current collector, and the positive electrode layer and the insulating layer.

<4> The solid-state battery of <3>, wherein the adhesive layer is conductive.

<5> The solid-state battery of <3>, wherein the adhesive layer has a thickness of 0.5 $\mu$m to 1.5 $\mu$m.

<6> The solid-state battery of any one of <1> to <5>, further comprising a negative electrode layer disposed on the solid electrolyte layer, wherein an end portion of the negative electrode layer is in a position overlying the solid electrolyte layer and the insulating layer in a cross-sectional view along a layering direction of the positive electrode current collector, the positive electrode layer and the insulating layer, and the solid electrolyte layer.

<7> The solid-state battery of any one of <1> to <6>, wherein an angle of inclination of an end face of the positive electrode layer that is contiguous with the insulating layer, and an angle of inclination of an end face of the insulating layer at an opposite side from an end face that is contiguous with the positive electrode layer, in a cross-sectional view along a layering direction of the positive electrode current collector, the positive electrode layer and the insulating layer, and the solid electrolyte layer, are in a range of ±10° relative to the layering direction.

<8> The solid-state battery of any one of <1> to <6>, wherein an angle of inclination of an end face of the insulating layer at an opposite side from an end face that is contiguous with the positive electrode layer is closer to 90° than an angle of inclination of an end face of the positive electrode layer that is contiguous with the insulating layer in a cross-sectional view along a layering direction of the positive electrode current collector, the positive electrode layer and the insulating layer, and the solid electrolyte layer.

<9> A method of manufacturing a solid-state battery, the method comprising: forming, on at least one main face of a positive electrode current collector, a positive electrode layer and an insulating layer that is contiguous with an end portion of the positive electrode layer and flush with the positive electrode layer; and forming a solid electrolyte layer on the positive electrode layer and the insulating layer such that an end portion of the solid electrolyte layer overlies the insulating layer.

<10> The method of manufacturing a solid-state battery of <9>, further comprising forming a negative electrode layer such that an end portion of the negative electrode layer overlies the solid electrolyte layer and the insulating layer in a cross-sectional view along a layering direction of the positive electrode current collector, the positive electrode layer and the insulating layer, and the solid electrolyte layer.

<11> The method of manufacturing a solid-state battery of <9> or <10>, wherein, in the forming the positive electrode layer and the insulating layer, an adhesive layer is formed on the at least one main face of the positive electrode current collector, and the positive electrode layer and the insulating layer, which have been formed on a transfer member, are transferred to the adhesive layer.

<12> The method of manufacturing a solid-state battery of <11>, wherein the adhesive layer is conductive.

<13> The method of manufacturing a solid-state battery of <11>, wherein the adhesive layer has a thickness of 0.5 μm to 1.5 μm.

<14> The method of manufacturing a solid-state battery of <11>, wherein a positive electrode slurry comprising a positive electrode active material is coated on the transfer member, thereafter, an inclined face of a peripheral edge portion of the coated positive electrode slurry is cut off and an insulating slurry comprising an insulating material is coated so as to be contiguous with the peripheral edge portion of the positive electrode slurry, and thereafter, an inclined face of a peripheral edge portion of the coated insulating slurry is cut off.

<15> The method of manufacturing a solid-state battery of <14>, wherein an angle of inclination of an end face of the positive electrode layer contiguous with the insulating layer, and an angle of inclination of an end face of the insulating layer at an opposite side from an end face that is contiguous with the positive electrode layer, in a cross-sectional view along a layering direction of the positive electrode current collector, the positive electrode layer and the insulating layer, and the solid electrolyte layer, are in a range of ±10° relative to the layering direction.

<16> The method of manufacturing a solid-state battery of <11>, wherein a positive electrode slurry comprising a positive electrode active material is coated on the transfer member, thereafter, an insulating slurry comprising an insulating material is coated so as to cover an inclined face of a peripheral edge portion of the coated positive electrode slurry, and thereafter, an inclined face of a peripheral edge portion of the coated insulating slurry is cut off.

<17> The method of manufacturing a solid-state battery of <16>, wherein an angle of inclination of an end face of the insulating layer at an opposite side from an end face that is contiguous with the positive electrode layer is closer to 90° than an angle of inclination of an end face of the positive electrode layer that is contiguous with the insulating layer in a cross-sectional view along a layering direction of the positive electrode current collector, the positive electrode layer and the insulating layer, and the solid electrolyte layer.

According to an embodiment of this disclosure, even if pressure is applied in the layered direction to a structure where a positive electrode layer and a solid electrolyte layer are sequentially laminated on a positive electrode current collector, damage to the solid electrolyte layer can be prevented.

BRIEF DESCRIPTION OF DRAWINGS

FIG. 1 is a cross-sectional view of main parts of a solid-state battery described as an embodiment of this disclosure;
FIG. 2 is a schematic plan view showing an example of a position where the surface of the solid-state battery in a plan view viewed from its upper face is cut by a plane parallel to a layered direction;
FIG. 3 is a cross-sectional view of main parts of a solid-state battery described as another embodiment of this disclosure;
FIG. 4A to FIG. 4D are cross-sectional views of main parts showing steps for forming a positive electrode layer and an insulating layer on a transfer member;
FIG. 5 is a cross-sectional view of main parts showing angles of inclination of end faces of the positive electrode layer and the insulating layer formed on the transfer member;
FIG. 6 is a cross-sectional view of main parts of a solid-state battery described as still another embodiment of this disclosure;
FIG. 7A to FIG. 7C are cross-sectional views of main parts showing steps for forming the positive electrode layer and the insulating layer on the transfer member; and
FIG. 8 is a cross-sectional view of main parts showing angles of inclination of the end faces of the positive electrode layer and the insulating layer formed on the transfer member.

DESCRIPTION OF EMBODIMENTS

In this disclosure, a numerical range described using "to" means a range that includes the numerical values appearing before and after the "to" as a minimum value and a maximum value, respectively.

In numerical ranges that are progressively described in this disclosure, the upper limit value or the lower limit value in a given numerical range may be replaced with the upper limit value or the lower limit value of another progressively described numerical range. In numerical ranges that are described in this disclosure, the upper limit value or the lower limit value described for a given numerical range may be replaced with values described in the Examples.

In this disclosure, the term "step" includes not only an independent step but also a step that cannot be clearly distinguished from another step as long as the intended object of that step is achieved.

In this disclosure, a combination of two or more preferred aspects is a more preferred aspect.

In this disclosure, when there are multiple types of materials applicable to each component, the amount of each component means the total amount of the multiple types of materials unless otherwise specified.

In this disclosure, when an embodiment is described with reference to drawings, the configuration of the embodiment is not limited to the configuration shown in the drawings. Furthermore, the sizes of members in the drawings are conceptual, and relative relationships between the sizes of the members is not limited to this.

<Solid-state Battery>

A solid-state battery of this disclosure will now be described below. The solid-state battery of this disclosure includes: a positive electrode current collector; a positive electrode layer disposed on at least one main face of the positive electrode current collector; an insulating layer that is disposed on the at least one main face of the positive electrode current collector, that is contiguous with an end portion of the positive electrode layer, and that is flush with the positive electrode layer; and a solid electrolyte layer disposed on the positive electrode layer and the insulating layer and having an end portion in a position overlying the insulating layer. In the solid-state battery of this disclosure, even if pressure is applied in the layered direction of the positive electrode current collector, the positive electrode layer, and the solid electrolyte layer (e.g., even if subjected to an external force in the layered direction in a confined state in which the current collector and the electrode layer are pressed tightly together in the layered direction), damage to the solid electrolyte layer can be prevented.

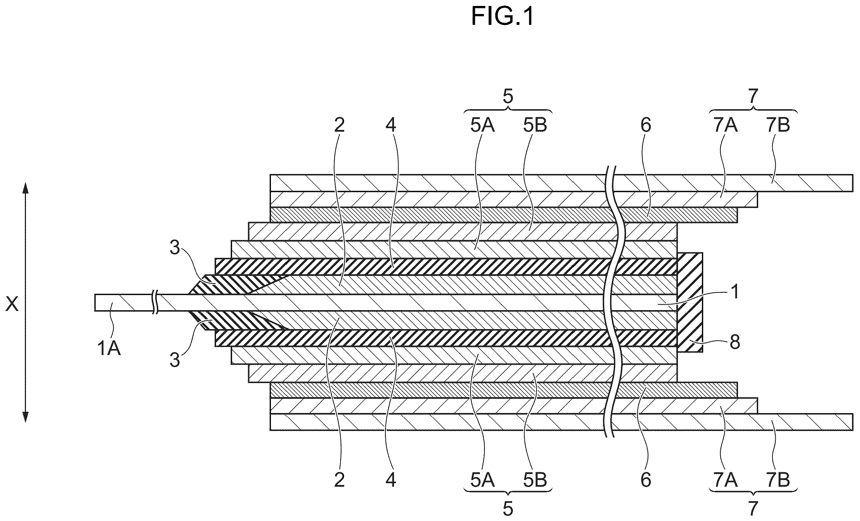

As shown in FIG. 1, a solid-state battery described as an embodiment of this disclosure includes a positive electrode current collector 1, positive electrode layers 2 and insulating layers 3 disposed on both main faces of the positive electrode current collector 1, solid electrolyte layers 4 disposed on the positive electrode layers 2 and the insulating layers 3, negative electrode layers 5 disposed on the solid electrolyte layers 4, carbon coating layers 6 disposed on the negative electrode layers 5, and negative electrode current collectors 7 disposed on the carbon coating layers 6.

Furthermore, in the solid-state battery shown in FIG. 1, the positive electrode current collector 1 has a positive electrode current collector tab-side end portion 1A connected to a positive electrode current collector tab. The insulating layers 3 and the positive electrode layers 2 are disposed in this order from the positive electrode current collector tab-side end portion 1A. The solid-state battery shown in FIG. 1 includes an end portion insulating portion 8 on the end portion of the positive electrode current collector 1 opposite from the positive electrode current collector tab-side end portion 1A. It will be noted that in this disclosure "layered direction" means the direction in which the positive electrode layers 2, the solid electrolyte layers 4, and so on are laminated from the positive electrode current collector 1 as indicated by arrow X in FIG. 1.

In the solid-state battery shown in FIG. 1, the negative electrode layers 5 are each divided into two layers, a first negative electrode layer 5A positioned on the solid electrolyte layer 4 and a second negative electrode layer 5B positioned on the first negative electrode layer 5A. However, the negative electrode layers 5 may also be single layers or have more than two divisional layers. Furthermore, in the solid-state battery shown in FIG. 1, the negative electrode current collectors 7 are each divided into two layers, a first negative electrode current collector 7A positioned on the negative electrode layer 5 and a second negative electrode current collector 7B positioned on the first negative electrode current collector 7A. However, the negative electrode current collectors 7 may also be single layers or have more than two divisional layers.

In the solid-state battery shown in FIG. 1, the positive electrode layers 2 and the insulating layers 3 are formed flush with each other on the main faces of the positive electrode current collector 1. That is, the positive electrode layers 2 and the insulating layers 3 are in contact with each other at one end face, and the main faces of the positive electrode layers 2 and the main faces of the insulating layers 3 form identical planes. In the solid-state battery shown in FIG. 1, the end portions of the solid electrolyte layers 4 on the positive electrode current collector tab-side end portion 1A side are in positions overlying the insulating layers 3. In other words, the end portions of the solid electrolyte layers 4 on the positive electrode current collector tab-side end portion 1A side are in positions not overlying the positive electrode layers 2, and the solid electrolyte layers 4 are formed so as to cover the entire faces of the positive electrode layers 2.

Furthermore, in the solid-state battery shown in FIG. 1, the positive electrode layers 2 are formed by applying a positive electrode slurry on the main faces of the positive electrode current collector 1 and drying it. For this reason, the end faces of the positive electrode layers 2 on the positive electrode current collector tab-side end portion 1A side become inclined faces due to coating run. It will be noted that the end faces of the positive electrode layers 2 opposite from the positive electrode current collector tab-side end portion 1A side are cut, so they become not inclined faces but faces in a direction substantially parallel to the layered direction. Furthermore, in the solid-state battery shown in FIG. 1, the insulating layers 3 are formed by applying and drying an insulating slurry including an insulating material after the positive electrode layers 2 having the inclined faces have been formed. Thus, the end faces of the insulating layers 3 on the positive electrode current collector tab-side end portion 1A side become inclined faces due to coating run. It will be noted that the end faces of the insulating layers 3 opposite from the positive electrode current collector tab-side end portion 1A side are cut, so they become not inclined faces but faces in a direction substantially parallel to the layered direction.

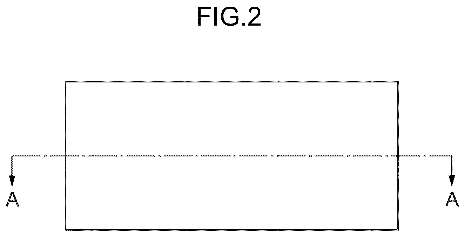

Furthermore, in the solid-state battery shown in FIG. 1, the end portions of the negative electrode layers 5 on the positive electrode current collector tab-side end portion 1A side are in positions overlying the solid electrolyte layers 4 and the insulating layers 3 in a cross-sectional view along the layered direction X of the positive electrode current collector 1, the positive electrode layers 2 and the insulating layers 3, and the solid electrolyte layers 4. The "cross-sectional view along the layered direction X" means when viewing a cross-section obtained by cutting the solid-state battery along the layered direction X of the battery laminate structure and particularly means when viewing a cross-section passing through the positive electrode current collector tab-side end portion 1A and the end portion opposite from the positive electrode current collector tab-side end portion 1A. More specifically, when the solid-state battery shown in FIG. 1 is a prismatic battery, the "cross-sectional view along the layered direction X" can, as shown in FIG. 2, be a cross-sectional view of a cross-section taken along line A-A, which substantially bisects the rectangle in its widthwise direction as viewed in a plan view from its upper face. It will be noted that in FIG. 2, line A-A, which substantially bisects the rectangle in its widthwise direction, passes through the positive electrode current collector tab-side end portion 1A and the end portion insulating portion 8.

In the solid-state battery configured as described above, the end faces of the solid electrolyte layers 4 disposed on the positive electrode layers 2 are in positions overlying not the positive electrode layers 2 but the insulating layers 3. Because of this, even if pressure is applied in the layered direction X to the solid-state battery, damage to the solid electrolyte layers 4, and particularly damage to the areas near the end faces of the solid electrolyte layers 4, can be prevented. Here, "pressure is applied in the layered direction X" means pressure is applied in a direction sandwiching the positive electrode current collector 1, the positive electrode layers 2 and the insulating layers 3, the solid electrolyte layers 4, the negative electrode layers 5, and the negative electrode current collectors 7. Although the drawings do not show this, the solid-state battery may further include confining members that confine the positive electrode layers 2 and the insulating layers 3, the solid electrolyte layers 4, the negative electrode layers 5, and the negative electrode current collectors 7 in the layered direction. The confining members apply confining pressure to the electrode laminate in its thickness direction. For example, the confining pressure may be equal to or greater than 0.1 MPa, equal to or greater than 1 MPa, or equal to or greater than 5 MPa for example and equal to or less than 100 MPa, equal to or less than 50 MPa, or equal to or less than 20 MPa for example. Even when the above pressure is applied by the confining members, in the solid-state battery of this disclosure, damage to the solid electrolyte layers 4, and particularly damage to the areas near the end faces of the solid electrolyte layers 4, can be prevented.

Furthermore, in the solid-state battery shown in FIG. 1, a positive electrode including the positive electrode current collector 1 and the positive electrode layers 2 is located near the center of the electrode laminate in the layered direction X, and negative electrodes including the negative electrode current collectors 7 and the negative electrode layers 5 are located on outer layer sides of the electrode laminate in the layered direction X. In the solid-state battery configured in this way, the positive electrode layers 2 can be densified by first disposing the positive electrode layers 2 and the insulating layers 3 on the main faces of the positive electrode current collector 1 and then compressing them in the layered direction. Thereafter, the solid electrolyte layers 4 and the negative electrode layers 5 are sequentially disposed on the positive electrode layers 2 and the insulating layers 3. That is, when manufacturing the solid-state battery, it suffices to dispose the negative electrode layers 5 after densifying the positive electrode layers 2, so a large pressure can be kept from being applied in the layered direction X to the negative electrode layers 5.

In particular, in the solid-state battery the negative electrode layers 5 use a material that occludes lithium ions, such as porous silicon or a carbon material, as a negative electrode active material. If a large pressure were to be applied in the layered direction X to the negative electrode layers 5, voids in the negative electrode active material may be crushed or the negative electrode active material may be crushed, which may reduce the function of occluding lithium ions. In the solid-state battery of this disclosure, a large pressure can be kept from being applied in the layered direction X to the negative electrode layers 5, so a reduction in the lithium-ion occluding function of the negative electrode active material can be prevented.

<Elements of Solid-state Battery>

(Positive Electrode Current Collector)

For the positive electrode current collector, any of those commonly used as positive electrode current collectors for batteries can be employed. Furthermore, the positive electrode current collector may be a foil, plate, mesh, punched metal, or foam, for example. The positive electrode current collector may be configured by a metal foil or a metal mesh. In particular, metal foil has excellent handling properties. The positive electrode current collector may comprise a plurality of foils. Examples of the metal configuring the positive electrode current collector include Cu, Ni, Cr, Au, Pt, Ag, Al, Fe, Ti, Zn, Co, and stainless steel. In particular, the positive electrode current collector may include Al from, for example, the standpoint of ensuring oxidation resistance. The positive electrode current collector may have some kind of coating layer on its surface for the purpose of, for example, adjusting resistance. Furthermore, the positive electrode current collector may comprise a metal foil or substrate on which the above metal is plated or vapor-deposited. It will be noted that when laminating the positive electrode layers and so forth on the positive electrode current collector such as shown in FIG. 1, an Al foil, such as an Al foil having a thickness of 10 $\mu$m for example, can be used as the positive electrode current collector.

(Positive Electrode Layers)

The positive electrode layers include at least a positive electrode active material and may also optionally include an electrolyte, a conductive additive, and a binder, for example. The positive electrode layers may also include various types of additives in addition to these. As the positive electrode active material, materials known as positive electrode active materials for secondary batteries can be used. The positive electrode active material may be at least one type selected from various types of lithium-containing compounds, elemental sulfur, and sulfur compounds. The lithium-containing compounds serving as the positive electrode active material may be various types of lithium-containing oxides such as lithium cobaltate, lithium nickelate, $Li_{1\pm\alpha}Ni_{1/3}Co_{1/3}Mn_{1/3}O_{2\pm\delta}$, lithium manganate, spinel-based lithium compounds (different element-substituted Li-Mn spinel having a composition represented by $Li_{1+x}Mn_{2-x-y}M_yO_4$ (M is one type or more selected from Al, Mg, Co, Fe, Ni, and Zn)), lithium titanate, and lithium metal phosphates (e.g., $LiMPO_4$, where M is one type or more selected from Fe, Mn, Co, and Ni). In particular, when the positive electrode active material includes a lithium-containing oxide including at least Li, at least one of Ni, Co, and Mn, and O as constituent elements, even greater effects can be expected. Just one type of positive electrode active material may be used alone, or a combination of two or more types may be used.

The shape of the positive electrode active material may be any shape that is common for positive electrode active materials for batteries. The positive electrode active material may be particulate, for example. The positive electrode active material may be solid, hollow, have voids, or be porous. The positive electrode active material may be primary particles or may be secondary particles in which a plurality of primary particles are agglomerated. Furthermore, a protective layer containing an ion-conducting oxide may be formed on the surface of the positive electrode active material. Because of this, reactions between the positive electrode active material and sulfides (e.g., sulfide solid electrolytes) are more easily inhibited. Examples of ion-conducting oxides include $Li_3BO_3$, $LiBO_2$, $Li_2CO_3$, $LiAlO_2$, $Li_4SiO_4$, $Li_2SiO_3$, $Li_3PO_4$, $Li_2SO_4$, $Li_2TiO_3$, $Li_4Ti_5O_{12}$, $Li_2Ti_2O_5$, $Li_2ZrO_3$, $LiNbO_3$, $Li_2MoO_4$, and $Li_2WO_4$.

(Solid Electrolyte)

The solid electrolyte included in the solid electrolyte layers preferably includes at least one solid electrolyte type selected from the solid electrolyte group comprising sulfide solid electrolytes, oxide solid electrolytes, and halide solid electrolytes.

The sulfide solid electrolyte preferably contains sulfur (S) as the main component of an anionic element and preferably further contains, in addition to S, the element Li, an element A, and the element S for example. The element A is at least one type selected from the group comprising P, As, Sb, Si, Ge, Sn, B, Al, Ga, and In. The sulfide solid electrolyte may further contain at least one of O and a halogen element. Examples of the halogen element (X) include F, Cl, Br, and I. The composition of the sulfide solid electrolyte is not particularly limited, and examples thereof include $xLi_2S\cdot(100-x)P_2S_5$ ($70\leq x\leq 80$) and $yLiI\cdot zLiBr\cdot(100-y-z)(xLi_2S\cdot(1-x)P_2S_5)$ ($0.7\leq x\leq 0.8$, $0\leq y\leq 30$, and $0\leq z\leq 30$).

The sulfur solid electrolyte may have the composition given by general formula (1) below.

$$\mathrm{Li_{4-x}Ge_{1-x}P_xS_4 \ (0 < x < 1)} \quad \cdots \text{Formula (1)}$$

In formula (1), at least part of Ge may be substituted with at least one selected from the group comprising Sb, Si, Sn, B, Al, Ga, In, Ti, Zr, V, and Nb. Furthermore, at least part of P may be substituted with at least one selected from the group comprising Sb, Si, Sn, B, Al, Ga, In, Ti, Zr, V, and Nb. Part of Li may be substituted with at least one selected from the group comprising Na, K, Mg, Ca, and Zn. Part of S may be substituted with a halogen. The halogen is at least one of F, Cl, Br, and I.

The oxide solid electrolyte preferably contains oxygen (O) as the main component of an anionic element and may, for example, contain Li, an element Q (Q represents at least one type of Nb, B, Al, Si, P, Ti, Zr, Mo, W, and S), and O. Examples of the oxide solid electrolyte include garnet-type solid electrolytes, perovskite-type solid electrolytes, NASICON-type solid electrolytes, Li-P-O-based solid electrolytes, and Li-B-O-based solid electrolytes. Examples of garnet-type solid electrolytes include $Li_7La_3Zr_2O_{12}$, $Li_{7-x}La_3(Zr_{2-x}Nb_x)O_{12}$ ($0 \leq x \leq 2$), and $Li_5La_3Nb_2O_{12}$. Examples of perovskite-type solid electrolytes include (Li, La)$TiO_3$, (Li, La)$NbO_3$, and (Li, Sr)(Ta, Zr)$O_3$. Examples of NASICON-type solid electrolytes include Li(Al, Ti)$(PO_4)_3$ and Li(Al, Ga)$(PO_4)_3$. Examples of Li-P-O-based solid electrolytes include $Li_3PO_4$ and LIPON (a compound in which part of O in $Li_3PO_4$ is substituted with N), and examples of Li-B-O-based solid electrolytes include $Li_3BO_3$ and compounds in which part of O in $Li_3BO_3$ is substituted with C.

As the halide solid electrolyte, a solid electrolyte including Li, M, and X (M represents at least one of Ti, Al, and Y, and X represents F, Cl, or Br) is preferred. Specifically, $Li_{6-3z}Y_zX_6$ (X represents Cl or Br, and z satisfies $0 < z < 2$) and $Li_{6-(4-x)b}(Ti_{1-x}Al_x)_bF_6$ ($0 < x < 1$ and $0 < b \leq 1.5$) are preferable. Among $Li_{6-3z}Y_zX_6$, in terms of having excellent lithium-ion conductivity, $Li_3YX_6$ (X represents Cl or Br) is more preferable and $Li_3YCl_6$ is even more preferable. Furthermore, $Li_{6-(4-x)b}(Ti_{1-x}Al_x)_bF_6$ ($0 < x < 1$ and $0 < b \leq 1.5$) is preferably included together with a solid electrolyte such as a sulfide solid electrolyte from standpoints such as inhibiting oxidative decomposition of the sulfide solid electrolyte for example.

(Solid Electrolyte Layers)

Examples of the solid electrolyte layers include electrolyte layers used in semi-solid-state batteries and all-solid-state batteries. The thickness of the solid electrolyte layers is not particularly limited and can be selected from the range of 1 $\mu$m to 30 $\mu$m for example. The type of solid electrolyte included in the solid electrolyte layers is not particularly limited. For example, the solid electrolyte may be selected from solid electrolytes that may be included in the electrode layers described above. The solid electrolyte layers may be single layers or have a multilayer structure of two or more layers.

When the solid-state battery of this disclosure includes a solid electrolyte, it may include, together with the solid electrolyte, less than 10% by mass of an electrolyte solution relative to the total amount of the electrolyte. When the battery of this disclosure includes a solid electrolyte, the solid electrolyte may be a composite solid electrolyte including an inorganic solid electrolyte and a polymer electrolyte. When the solid-state battery of this disclosure includes an electrolyte solution as the electrolyte, the type of the electrolyte solution is not particularly limited, and known electrolyte solutions can be used. Specific examples of the electrolyte solution include a liquid in which a lithium salt such as $LiPF_6$ or LiFSi is dissolved in an organic solvent.

(Negative Electrode Layers)

The negative electrode layers include at least a negative electrode active material and may also optionally include an electrolyte, a conductive additive, and a binder, for example. The negative electrode layers may also include various types of additives in addition to these. Examples of negative electrode active materials include carbon materials, active materials including the element Si, metallic lithium, lithium-containing alloys, metals or alloys capable of being alloyed with lithium, oxides, and transition metal nitrides. Examples of carbon materials include graphite materials, amorphous carbon materials, carbon black, and activated carbon. Examples of graphite materials include natural graphite and artificial graphite. Examples of amorphous carbon materials include hard carbon, soft carbon, coke, mesocarbon microbeads (MCMB), and mesophase pitch carbon fiber (MCF). The graphite material may be coated with a metal or amorphous carbon. Examples of active materials including the element Si include elemental silicon, silicon alloys (e.g., alloys of Si and one or more metals selected from the group comprising Sn, Ti, Fe, Ni, Cu, Co, and Al), porous silicon, silicon clathrate compounds, and silicon oxides.

(Negative Electrode Current Collectors)

For the negative electrode current collectors, any of those commonly used as negative electrode current collectors for batteries can be employed. Furthermore, the negative electrode current collectors may be a foil, plate, mesh, punched metal, or foam, for example. The negative electrode current collectors may be a metal foil or a metal mesh, or may be a carbon sheet. The negative electrode current collectors may comprise a plurality of foils or sheets. Examples of metals configuring the negative electrode current collectors include Cu, Ni, Cr, Au, Pt, Ag, Al, Fe, Ti, Zn, Co, and stainless steel. In particular, from the standpoint of ensuring reduction resistance and the standpoint of being difficult to alloy with lithium, the negative electrode current collectors may include at least one type of metal selected from Cu, Ni, and stainless steel.

The negative electrode current collectors may have some kind of coating layer on their surfaces for the purpose of, for example, adjusting resistance. Furthermore, the negative electrode current collectors may comprise a metal foil or substrate on which the above metal is plated or vapor-deposited. Furthermore, when the negative electrode current collectors comprise a plurality of metal foils, they may include some kind of layer between the plural metal foils. The thickness of the negative electrode current collectors is not particularly limited. For example, the thickness may be 0.1 $\mu$m or more or 1 $\mu$m or more and 1 mm or less or 100 $\mu$m or less. For example, in the solid-state battery such as shown in FIG. 1, Al foils (corresponding to the second negative electrode current collectors 7B in FIG. 1) having Ni-plated layers (corresponding to the first negative electrode current collectors 7A in FIG. 1) can be used as the negative electrode current collectors. More specifically, for example, an Al foil having a thickness of 10 $\mu$m on which a Ni-plated layer having a thickness of 1 $\mu$m is laminated can be used as each of the negative electrode current collectors.

(Carbon Coating Layers)

The carbon coating layers function as adhesive layers for bonding the negative electrode current collectors to the negative electrode layers and also function as conductive layers for ensuring electrical continuity between the negative electrode current collectors and the negative electrode layers. Examples of the carbon material included in the carbon coating layers include graphite materials, amorphous carbon materials, carbon black, and activated carbon. Examples of graphite materials include natural graphite and artificial graphite. Examples of amorphous carbon materials can include hard carbon, soft carbon, coke, mesocarbon microbeads (MCMB), and mesophase pitch carbon fiber (MCF).

(Casing)

The solid-state battery of this disclosure may further include a casing. The casing houses at least the electrode laminate. Examples of the casing include a laminate type casing and a case type casing. The laminate type casing may be formed from a laminate (laminate film) having a metal layer including a metal such as aluminum and a heat seal layer including a resin that melts upon being heated.

(Confining Members)

The solid-state battery of this disclosure may further include confining members. The confining members apply confining pressure to the electrode laminate in its thickness direction. The confining pressure applied in the thickness direction of the electrode laminate may, for example, be 0.1 MPa or more, 1 MPa or more, or 5 MPa or more. The confining pressure applied in the thickness direction of the electrode laminate may, for example, be 100 MPa or less, 50 MPa or less, or 20 MPa or less.

<Solid-state Battery Manufacturing Method>

The solid-state battery manufacturing method of this disclosure includes: a step of forming, on at least one main face of a positive electrode current collector, a positive electrode layer and an insulating layer that is contiguous with the end portion of the positive electrode layer and flush with the positive electrode layer; and a step of forming a solid electrolyte layer on the positive electrode layer and the insulating layer such that its end portion overlies the insulating layer. According to the solid-state battery manufacturing method of this disclosure, damage to the solid electrolyte layer can be prevented even if pressure is applied in the layered direction of the positive electrode current collector, the positive electrode layer, and the solid electrolyte layer. In particular, in the solid-state battery manufacturing method of this disclosure, it is preferred that the positive electrode layer be densified by compressing the positive electrode layer and the insulating layer in the layered direction after forming the positive electrode layer and the insulating layer on the main face of the positive electrode current collector.

Next, in the solid-state battery manufacturing method of this disclosure, a negative electrode layer is formed such that its end portion overlies the solid electrolyte layer and the insulating layer in a cross-sectional view along the layered direction of the positive electrode current collector, the positive electrode layer and the insulating layer, and the solid electrolyte layer.

Regarding the solid-state battery manufacturing method of this disclosure, taking the solid-state battery shown in FIG. 1 as an example, first the positive electrode layers 2 and the insulating layers 3 are formed on both main faces of the positive electrode current collector 1. Thereafter, the solid electrolyte layers 4 are formed on the positive electrodes layers 2 and the insulating layers 3 such that their end portions overlie the insulating layers 3. Then, the negative electrode layers 5, the carbon coating layers 6, and the negative electrode current collectors 7 are sequentially formed on the solid electrolyte layers 4, whereby the solid-state battery shown in FIG. 1 can be manufactured. At this time, it is preferred that the positive electrode layers 2 and the insulating layers 3 be formed on both main faces of the positive electrode current collector 1 and that the positive electrode layers 2 formed on both main faces of the positive electrode current collector 1 by densified by compressing them in the layered direction X so as to sandwich the positive electrode current collector 1. Then, the solid electrolyte layers 4 are formed after the positive electrode layers 2 have been densified. It will be noted that the positive electrode layers 2 and the solid electrolyte layers 4 can also be densified at the same time by forming the solid electrolyte layers 4 and thereafter compressing them in the layered direction X so as to sandwich the positive electrode current collector 1.

Thereafter, the negative electrode layers 5 are formed on the solid electrolyte layers 4. At this time, the negative electrode layers 5 are formed such that the end portions of the negative electrode layers 5 on the positive electrode current collector tab-side end portion 1A side overlie the solid electrolyte layers 4 and the insulating layers 3. Then, the carbon coating layers 6 in the laminates comprising the negative electrode current collectors 7 and the carbon coating layers 6 are adhered to the negative electrode layers 5. Because of this, the carbon coating layers 6 and the negative electrode current collectors 7 can be formed on the negative electrode layers 5.

According to the solid-state battery manufacturing method of this disclosure, the solid electrolyte layers 4 are formed such that the end faces of the solid electrolyte layers 4 are in positions overlying the insulating layers 3 and not the positive electrode layers 2. Because of this, even if pressure is applied in the layered direction X to the solid-state battery, damage to the solid electrolyte layers 4, and particularly damage to the areas near the end faces of the solid electrolyte layers 4, can be prevented. Furthermore, according to the solid-state battery manufacturing method of this disclosure, it suffices for the negative electrode layers 5 to be disposed after the positive electrode layers 2 have been densified, so a large pressure can be kept from being applied in the layered direction X to the negative electrode layers 5.

<Other Embodiment 1>

The solid-state battery of this disclosure is not limited to the configuration shown in FIG. 1 and may have an adhesive layer between the positive electrode current collector and the positive electrode layer and the insulating layer. In this case also, the positive electrode layer and the insulating layer are formed on at least one main face of the positive electrode current collector, and at this time a method can be employed where the adhesive layer is formed on the one main face of the positive electrode current collector and then the positive electrode layer and the insulating layer which have been formed on a transfer member are transferred to the adhesive layer. In the following, the same members as those in the above embodiment are designated by the same reference numerals, and detailed description thereof will be omitted herein.

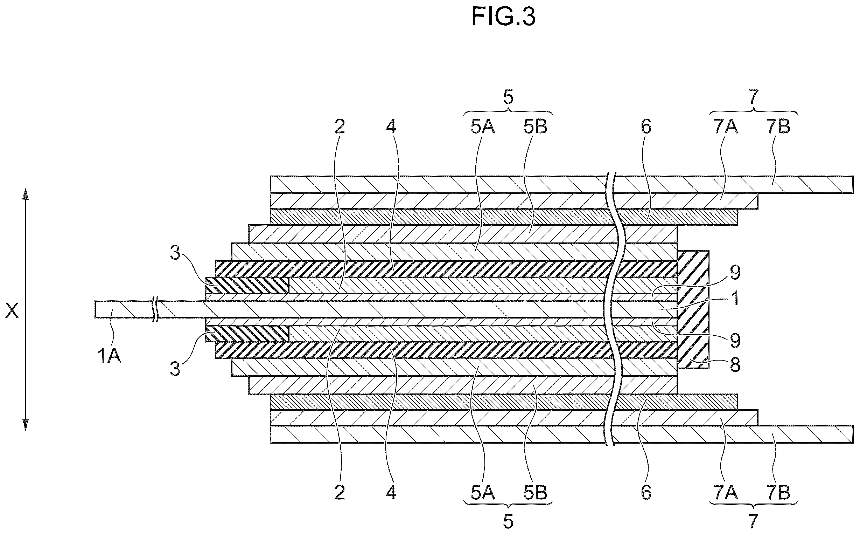

Specifically, as shown in FIG. 3, the solid-state battery of this disclosure may have adhesive layers 9 between the positive electrode current collector 1 and the positive electrode layers 2 and the insulating layers 3. In the solid-state battery shown in FIG. 3, the adhesive layers 9 are configured as single layers so as to cover the entireties of both main faces of the positive electrode current collector 1, but they may also be formed like islands on parts of both main faces of the positive electrode current collector 1. That is, the adhesive layers 9 may be layers covering the entireties of both main faces of the positive electrode current collector 1 or may be like islands as long as they have the function of adhering the positive electrode layers 2 and the insulating layers 3 to both main faces of the positive electrode current collector 1.

In particular, the adhesive layers 9 are preferably conductive. When the adhesive layers 9 are conductive, electrical bonding between the positive electrode current collector 1 and the positive electrode layers 2 can be ensured even when the adhesive layers 9 are laminated as single layers on the positive electrode current collector 1.

Moreover, the thickness of the adhesive layers 9 is not particularly limited but is preferably 0.5 $\mu$m to 1.5 $\mu$m, more preferably 0.5 $\mu$m to 1.0 $\mu$m, and even more preferably 0.8 $\mu$m to 1.0 $\mu$m. By setting the thickness of the adhesive layers 9 in this range, even if the adhesive layers 9 are not conductive, electrical bonding between the positive electrode current collector 1 and the positive electrode layers 2 can be ensured because the positive electrode active material and the like included in the positive electrode layers 2 penetrates the adhesive layers 9.

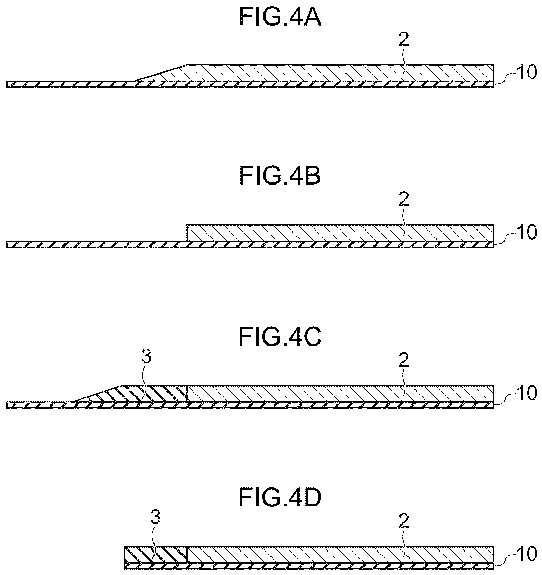

The solid-state battery shown in FIG. 3 is not particularly limited. For example, as shown in FIGs. 4A to 4D, a method can be applied where the positive electrode layer 2 and the insulating layer 3 are formed on a transfer member 10 and then the positive electrode layer 2 and the insulating layer 3 are transferred to the adhesive layer 9 that has been formed on the positive electrode current collector 1. Specifically, first, as shown in FIG. 4A, a positive electrode slurry including a positive electrode active material is coated on one main face of the transfer member 10 to form the positive electrode layer 2. At this time, the peripheral edge portion of the positive electrode layer 2 becomes an inclined face due to coating run of the positive electrode slurry coated on the one main face of the transfer member 10. Thereafter, as shown in FIG. 4B, the inclined face of the positive electrode layer 2 caused by coating run is cut off. Then, as shown in FIG. 4C, an insulating slurry including an insulating material is applied such that it contacts the end face of the positive electrode layer 2. At this time, the peripheral edge portion of the insulating layer 3 becomes an inclined face due to coating run of the insulating slurry. Thereafter, as shown in FIG. 4D, the inclined face of the insulating layer 3 caused by coating run is cut off. In the way described above, the positive electrode layer 2 and the insulating layer 3 can be formed on the one main face of the transfer member 10.

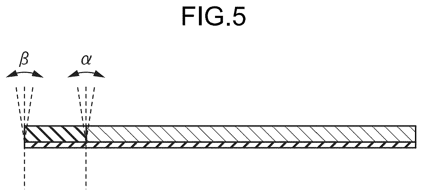

In the solid-state battery shown in FIG. 3, by cutting off the inclined faces of the positive electrode layer 2 and the insulating layer 3 caused by coating run, the region that can be utilized as the positive electrode layer 2 can be designed wide, and battery performance can be improved. Furthermore, in the solid-state battery shown in FIG. 3, by cutting off the inclined face of the insulating layer 3 caused by coating run, the mechanical strength of the end portion of the insulating layer 3 on the positive electrode current collector tab-side end portion 1A side can be improved. Specifically, as shown in FIG. 5, an angle of inclination $\alpha$ of the end face of the positive electrode layer 2 contiguous with the insulating layer 3 and an angle of inclination $\beta$ of the end face of the insulating layer 3 opposite from the end face contiguous with the positive electrode layer 2 are preferably in the range of $\pm 10°$, and more preferably in the range of $\pm 5°$, relative to the layered direction X in the cross-sectional view. By setting the angle of inclination $\alpha$ and the angle of inclination $\beta$ in this range, the region that can be utilized as the positive electrode layer 2 can be designed wide, and battery performance can be improved.

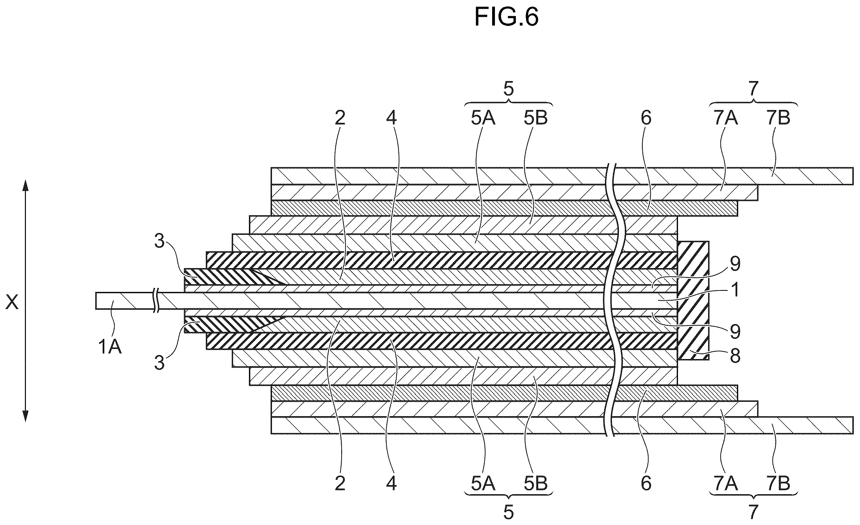

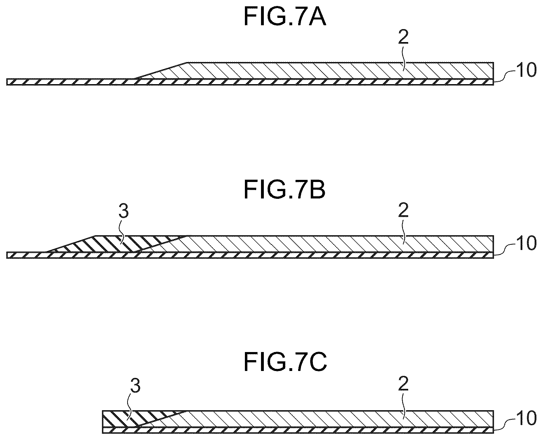

In this connection, when using the transfer member 10 to transfer the positive electrode layer 2 and the insulating layer 3 to the adhesive layer 9, rather than cut off the inclined faces of both the positive electrode layer 2 and the insulating layer 3 that are caused by coating run as shown in FIG. 4A to FIG. 4D, just the inclined face of the insulating layer 3 can also be cut off. In this case, as shown in FIG. 6, the solid-state battery has the characteristic that the angle of inclination of the end face of the insulating layer 3 opposite from the end face contiguous with the positive electrode layer 2 is closer to 90° than the angle of inclination of the end face of the positive electrode layer 2 contiguous with the insulating layer 3 in the cross-sectional view. In this case, as shown in FIG. 7A, the positive electrode slurry including the positive electrode active material is coated on the one main face of the transfer member 10 to form the positive electrode layer 2. At this time, the end portion of the positive electrode layer 2 becomes an inclined face due to coating run of the positive electrode slurry coated on the one main face of the transfer member 10. Thereafter, as shown in FIG. 7B, the insulating slurry including the insulating material is applied so as to cover the inclined face of the positive electrode layer 2. At this time, the end portion of the insulating layer 3 becomes an inclined face due to coating run of the insulating slurry. Thereafter, as shown in FIG. 7C, the inclined face of the insulating layer 3 caused by coating run is cut off. In the way described above, the positive electrode layer 2 having the inclined face and the insulating layer 3 whose inclined face has been cut off can be formed on the one main face of the transfer member 10.

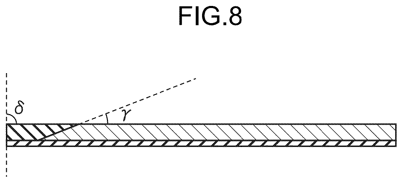

In the solid-state battery shown in FIG. 6, the mechanical strength of the end portion of the insulating layer 3 on the positive electrode current collector tab-side end portion 1A side can be improved by cutting off the inclined face of the insulating layer 3 caused by coating run. Specifically, as shown in FIG. 8, an angle of inclination $\delta$ of the end face of the insulating layer 3 opposite from the end face contiguous with the positive electrode layer 2 can be made closer to 90° than an angle of inclination $\gamma$ of the end face of the positive electrode layer 2 contiguous with the insulating layer 3. Because of this, the mechanical strength of the end portion of the insulating layer 3 on the positive electrode current collector tab-side end portion 1A side can be improved.

<Battery Types and Applications>

The type of the solid-state battery is not particularly limited and is typically a lithium-ion battery. Furthermore, the solid-state battery of this disclosure may be a primary battery or a secondary battery but among these is preferably a secondary battery. This is because a secondary battery can be repeatedly charged and discharged and is useful as an automotive battery for example. The solid-state battery may be a semi-solid-state battery such as one having a gel layer including an electrolyte solution and a polymer between an electrode and a solid electrolyte layer or may be an all-solid-state battery using a solid electrolyte as the electrolyte. The solid electrolyte may include less than 10% by mass of an electrolyte solution relative to the total amount of the electrolyte. The solid-state battery is preferably an all-solid-state battery.

The applications of the battery of this disclosure are not particularly limited. Examples of representative applications include being a power source for vehicles, electronic devices, and electrical storage systems. The battery may be used as a power source for moving bodies other than vehicles (e.g., trains, ships, and aircraft) and may be used as a power source for electrical products such as information processing devices. Among these, the application of the battery of this disclosure is preferably as a power source for vehicles and preferably as a power source for driving hybrid electric vehicles, plug-in hybrid electric vehicles, or battery electric vehicles.

Examples of vehicles include four-wheeled electric vehicles, two-wheeled electric vehicles, gasoline automobiles, and diesel automobiles. Examples of four-wheeled electric vehicles include battery electric vehicles (BEV), plug-in hybrid electric vehicles (PHEV), and hybrid electric vehicles (HEV). Examples of two-wheeled electric vehicles include electric bikes and pedal-assist electric bicycles.

**Claims**

1.  A solid-state battery, comprising:

    a positive electrode current collector (1);
    a positive electrode layer (2) disposed on at least one main face of the positive electrode current collector (1);

an insulating layer (3) that is disposed on the at least one main face of the positive electrode current collector (1), that is contiguous with an end portion of the positive electrode layer (2), and that is flush with the positive electrode layer (2); and

a solid electrolyte layer (4) disposed on the positive electrode layer (2) and the insulating layer (3) and having an end portion in a position overlying the insulating layer (3).

2. The solid-state battery of claim 1, wherein the positive electrode current collector (1) comprises a positive electrode current collector tab-side end portion (1A) connected to a positive electrode current collector tab, and wherein the insulating layer (3) and the positive electrode layer (2) are disposed in this order from the positive electrode current collector tab-side end portion (1A).

3. The solid-state battery of claim 1 or 2, comprising an adhesive layer (9) between the positive electrode current collector (1), and the positive electrode layer (2) and the insulating layer (3).

4. The solid-state battery of claim 3, wherein the adhesive layer (9) is conductive.

5. The solid-state battery of claim 3, wherein the adhesive layer (9) has a thickness of 0.5 $\mu$m to 1.5 $\mu$m.

6. The solid-state battery of any one of claims 1 to 5, further comprising a negative electrode layer (5) disposed on the solid electrolyte layer (4), wherein an end portion of the negative electrode layer (5) is in a position overlying the solid electrolyte layer (4) and the insulating layer (3) in a cross-sectional view along a layering direction of the positive electrode current collector (1), the positive electrode layer (2) and the insulating layer (3), and the solid electrolyte layer (4).

7. The solid-state battery of any one of claims 1 to 6, wherein an angle of inclination of an end face of the positive electrode layer (2) that is contiguous with the insulating layer (3), and an angle of inclination of an end face of the insulating layer (3) at an opposite side from an end face that is contiguous with the positive electrode layer (2), in a cross-sectional view along a layering direction of the positive electrode current collector (1), the positive electrode layer (2) and the insulating layer (3), and the solid electrolyte layer (4), are in a range of $\pm 10°$ relative to the layering direction.

8. The solid-state battery of any one of claims 1 to 6, wherein an angle of inclination of an end face of the insulating layer (3) at an opposite side from an end face that is contiguous with the positive electrode layer (2) is closer to 90° than an angle of inclination of an end face of the positive electrode layer (2) that is contiguous with the insulating layer (3) in a cross-sectional view along a layering direction of the positive electrode current collector (1), the positive electrode layer (2) and the insulating layer (3), and the solid electrolyte layer (4).

9. A method of manufacturing a solid-state battery, the method comprising:

forming, on at least one main face of a positive electrode current collector (1), a positive electrode layer (2) and an insulating layer (3) that is contiguous with an end portion of the positive electrode layer (2) and flush with the positive electrode layer (2); and

forming a solid electrolyte layer (4) on the positive electrode layer (2) and the insulating layer (3) such that an end portion of the solid electrolyte layer (4) overlies the insulating layer (3).

10. The method of manufacturing a solid-state battery of claim 9, further comprising forming a negative electrode layer (5) such that an end portion of the negative electrode layer (5) overlies the solid electrolyte layer (4) and the insulating layer (3) in a cross-sectional view along a layering direction of the positive electrode current collector (1), the positive electrode layer (2) and the insulating layer (3), and the solid electrolyte layer (4).

11. The method of manufacturing a solid-state battery of claim 9 or 10, wherein, in the forming the positive electrode layer (2) and the insulating layer (3), an adhesive layer (9) is formed on the at least one main face of the positive electrode current collector (1), and the positive electrode layer (2) and the insulating layer (3), which have been formed on a transfer member, are transferred to the adhesive layer (9).

12. The method of manufacturing a solid-state battery of claim 11, wherein the adhesive layer (9) is conductive.

13. The method of manufacturing a solid-state battery of claim 11, wherein the adhesive layer (9) has a thickness of 0.5 $\mu$m to 1.5 $\mu$m.

14. The method of manufacturing a solid-state battery of claim 11, wherein a positive electrode slurry comprising a positive electrode active material is coated on the transfer member, thereafter, an inclined face of a peripheral edge portion of the coated positive electrode slurry is cut off and an insulating slurry comprising an insulating material is coated so as to be contiguous with the peripheral edge portion of the positive electrode slurry, and thereafter, an inclined face of a peripheral edge portion of the coated insulating slurry is cut off.

15. The method of manufacturing a solid-state battery of claim 14, wherein an angle of inclination of an end face of the positive electrode layer (2) contiguous with the insulating layer (3), and an angle of inclination of an end face of the insulating layer (3) at an opposite side from an end face that is contiguous with the positive electrode layer (2), in a cross-sectional view along a layering direction of the positive electrode current collector (1), the positive electrode layer (2) and the insulating layer (3), and the solid electrolyte layer (4), are in a range of ±10° relative to the layering direction.

16. The method of manufacturing a solid-state battery of claim 11, wherein a positive electrode slurry comprising a positive electrode active material is coated on the transfer member, thereafter, an insulating slurry comprising an insulating material is coated so as to cover an inclined face of a peripheral edge portion of the coated positive electrode slurry, and thereafter, an inclined face of a peripheral edge portion of the coated insulating slurry is cut off.

17. The method of manufacturing a solid-state battery of claim 16, wherein an angle of inclination of an end face of the insulating layer (3) at an opposite side from an end face that is contiguous with the positive electrode layer (2) is closer to 90° than an angle of inclination of an end face of the positive electrode layer (2) that is contiguous with the insulating layer (3) in a cross-sectional view along a layering direction of the positive electrode current collector (1), the positive electrode layer (2) and the insulating layer (3), and the solid electrolyte layer (4).

# FIG.1

EP 4 773 317 A1

FIG.2

EP 4 773 317 A1

# FIG.3

FIG.4A

2

10

FIG.4B

2

10

FIG.4C

3

2

10

FIG.4D

3

2

10

# FIG.5

FIG.6

## FIG.7A

## FIG.7B

## FIG.7C

# FIG.8

Europäisches
Patentamt

European
Patent Office

Office européen
des brevets

## EUROPEAN SEARCH REPORT

**Application Number**

EP 25 22 0987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2023 107428 A (NISSAN MOTOR; RENAULT SAS) 3 August 2023 (2023-08-03) * paragraphs [0011] - [0018]; figures 1,2,5,6 * | 1-17 | INV. H01M10/0585 |
| X | US 2013/323568 A1 (TANAKA KATSUHISA [JP]) 5 December 2013 (2013-12-05) * paragraphs [0002] - [0018]; figures 1-4 * | 1,2,9 | |
| X,D | & WO 2012/114497 A1 (TOYOTA MOTOR CO LTD [JP]; TANAKA KATSUHISA [JP]) 30 August 2012 (2012-08-30) * the whole document * | 1,2,9 | |
| A | JP 2010 272368 A (TOYOTA MOTOR CORP) 2 December 2010 (2010-12-02) * claims 1-6; figure 10 * | 1-17 | |
| A | JP S59 196576 A (SANYO ELECTRIC CO) 7 November 1984 (1984-11-07) * claim 1; figure 1 * | 1-17 | |

**TECHNICAL FIELDS SEARCHED (IPC)**

H01M

The present search report has been drawn up for all claims

| Place of search | Date of completion of the search | Examiner |
|---|---|---|
| Munich | 26 May 2026 | González Junquera, J |

EPO FORM 1503 03.82 (P04C01)

**EP 4 773 317 A1**

## ANNEX TO THE EUROPEAN SEARCH REPORT
## ON EUROPEAN PATENT APPLICATION NO.

EP 25 22 0987

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2026

| Patent document cited in search report | | | Publication date | Patent family member(s) | | | Publication date |
|---|---|---|---|---|---|---|---|
| JP 2023107428 | A | | 03-08-2023 | JP | 7822187 | B2 | 02-03-2026 |
| | | | | JP | 2023107428 | A | 03-08-2023 |
| US 2013323568 | A1 | | 05-12-2013 | CN | 103620856 | A | 05-03-2014 |
| | | | | JP | 5610057 | B2 | 22-10-2014 |
| | | | | JP WO2012114497 | A1 | 07-07-2014 |
| | | | | US | 2013323568 | A1 | 05-12-2013 |
| | | | | WO | 2012114497 | A1 | 30-08-2012 |
| JP 2010272368 | A | | 02-12-2010 | JP | 5417989 | B2 | 19-02-2014 |
| | | | | JP | 2010272368 | A | 02-12-2010 |
| JP S59196576 | A | | 07-11-1984 | NONE | | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012114497 A

- JP 2023107428 A